# EUROPEAN PATENT SPECIFICATION

(11) **EP 2 629 961 B1**
(45) Date of publication and mention of the grant of the patent: **02.09.2015**
(21) Application number: 11776603.0
(22) Date of filing: 21.10.2011
(51) Int. Cl.: B29C 67/00

(54) **ADDITIVE FABRICATION APPARATUS AND METHOD OF LAYERWISE PRODUCTION OF A TANGIBLE OBJECT**
VORRICHTUNG ZUR HERSTELLUNG EINES ZUSATZES UND VERFAHREN ZUR SCHICHTWEISEN HERSTELLUNG EINES GREIFBAREN OBJEKTS
DISPOSITIF DE FABRICATION SUPPLÉMENTAIRE ET PROCÉDÉ DE PRODUCTION EN COUCHES D'UN OBJET TANGIBLE

(30) Priority: 22.10.2010 EP 10188605
(43) Date of publication of application: 28.08.2013
(73) Proprietor: DSM IP Assets B.V., 6411 TE Heerlen (NL)
(72) Inventor: GEERS, Leon Ferdinand Gerard, NL-6411 TE Heerlen (NL); PIETERSE, Gerben, NL-6411 TE Heerlen (NL); POLLE, Krista, NL-6411 TE Heerlen (NL)
(74) Representative: Jansen, Cornelis Marinus
(86) International application number: PCT/NL2011/050718
(87) International publication number: WO 2012/053895

(56) References cited:
- EP-A1- 2 199 067
- US-A- 5 192 559

## Description

### FIELD AND BACKGROUND OF THE INVENTION

The invention relates to an additive fabrication apparatus and method for layerwise production of a tangible object. It is known to press a small volume of liquid between a foil and a tangible object to provide a thin liquid layer than can be solidified. The flexible foil is preferably transparent to curing radiation. A firstly formed solid layer of the tangible object is adhered to the underside of the carrier plate by selectively solidifying the liquid. Consecutively formed solid layers are each adhered to a previously formed solid layer, respectively.

Each time after solidification of a new layer, a foil guiding stage is moved to peel off the foil from the earlier solidified layers adhered thereon in order to separate the last formed solid layer from the foil. Non-solidified parts of the liquid layer remain on the foil and need to be reconditioned when a new solidification starts.

A desire exists to increase the speed of the production process and to enhance the layer quality.

EP-A-2199067 discloses the respective preambles of claims 1, 8 and 17.

### SUMMARY OF THE INVENTION

According to a first aspect of the invention, an additive fabrication apparatus is provided comprising: a carrier plate (150) capable of supporting a tangible object (50); a foil (6) capable of supporting a liquid layer (30); said carrier plate (150) and foil (6) capable of relative movement with respect to each other so as to bring the liquid layer (30) into contact with the carrier plate or the tangible object (50); an energy source (90) arranged for at least partially solidifying at least part of an intersection pattern in the liquid layer arranged on the foil and in contact with the tangible object; and an applicator system (2) for applying the liquid layer (30) on the foil (6) comprising a first applicator, wherein the first applicator is arranged to alternate between providing a supply condition wherein liquid is supplied to the foil via an orifice and providing an uptake condition wherein liquid is taken up from the foil via the orifice. A single orifice may be used for both supply and uptake, or a different orifice may be used in the same applicator for the supply condition and the uptake condition. The applicator may be moveable and the supply condition or uptake condition may be dependent on the movement of the applicator.

Another embodiment of the apparatus is defined in claim 8.

In another aspect, a method of layerwise production of a tangible object is provided comprising: moving a foil guiding stage having a contact face and comprising on opposite sides of the contact face a pair of upper and lower foil guiding elements, the lower foil guiding element defining a foil height position (H0) distanced from the contact face, to guide a portion of the foil including a liquid layer from the foil height position H(0), along the contact face to contact a tangible object by movement of the foil guiding stage along the tangible object while keeping the portion of the foil contacting the tangible object stationary relative to the object; providing a liquid supply condition by applying the liquid layer on the foil; at least partially solidifying at least part of an intersection pattern in the liquid layer arranged on the foil and in contact with the tangible object by an energy source; and providing a liquid uptake condition wherein liquid is taken up from the foil into an orifice movable with the foil guiding stage; the uptake condition being dependent on a movement direction of the orifice so that liquid is taken up from the foil into the orifice after solidification of at least said part of the intersection pattern.

Specific embodiments of the invention are set forth in the dependent claims.

These and other aspects of the invention will be apparent from and elucidated with reference to the embodiments described hereinafter.

### BRIEF DESCRIPTION OF THE DRAWINGS

Further details, aspects and embodiments of the invention will be described, by way of example only, with reference to the drawings.
Figure 1 shows a first embodiment of an applicator system;
Figure 2 shows a second embodiment of the applicator system provided on sub stages;
Figure 3 shows a detailed view on an alternative wedged plate configuration;
Figure 4 shows an advantageous position of the liquid supply;
Figure 5 shows a variation of the embodiment of Figure 4;
Figure 6 shows an embodiment having two pressurized orifices; and
Figure 7 shows a further embodiment of orifices with a controllable tilt angle.

### DETAILED DESCRIPTION

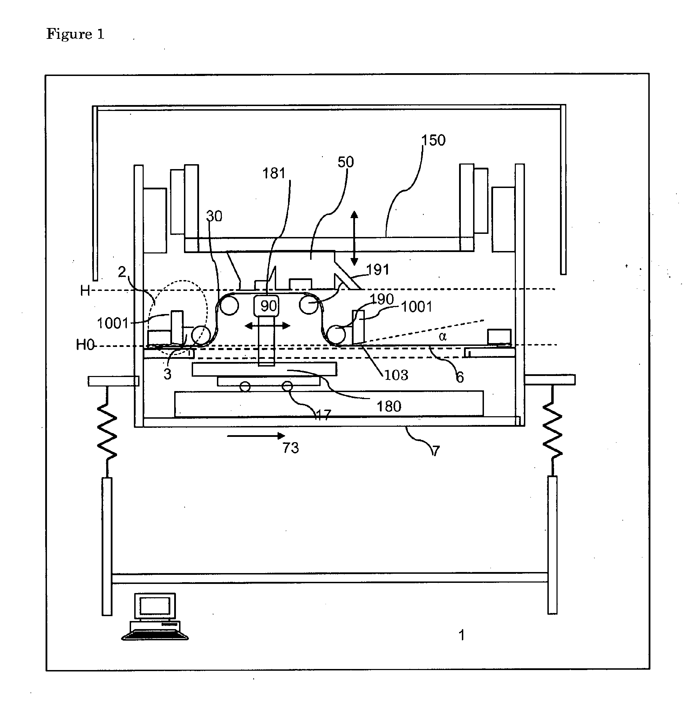

Reference is now made to Figure 1, which shows a system 1 according to the invention. While the solidifying method can be applied either in a unidirectional way or in a bidirectional way, an advantage of bidirectional use may be that process time can be gained by avoiding to have to return all the process stages back to their start position before a new cycle can be started. Instead, after a pass in one direction, the stage(s) can reverse instantly and start the process in the opposite direction. This requires a certain mirror symmetry in the machine, so certain elements can switch functions when the direction is switched.

In this embodiment, the system 1 comprises a liquid applicator 2 which, in the shown example, is filled with a liquid 3.

The system 1 further comprises a construction shape in the form of a flexible foil 6. On the foil 6, a liquid layer is formed of limited height to be brought in contact with the tangible object 50. The system 1 further comprises a energy source 90 for solidifying a predetermined area 30 of a layer of the liquid 3, said liquid layer 30 adjoining the construction shape 6, so as to obtain a solid layer of the tangible object 50, the solid layer thus having a predetermined shape.

In one embodiment, the energy source 90 is an energy source arranged to project a pattern through the foil 6 when the liquid layer 30 contacts the tangible object 50. In particular, the energy source 90 is arranged for at least partially curing at least part of an intersection pattern in the liquid layer 30. To enable the light or other radiation of the energy source 90 to solidify the liquid layer 30, the construction shape 6 (flexible foil 6) is preferably substantially transparent to the radiation.

In one embodiment, each time after solidification and separation of a new layer, carrier plate (z-stage) 150 together with the tangible object 50 including solidified layers adhered thereon are moved upwards. Hence, the method for layerwise production of a tangible object is a cyclic method, wherein the described steps of positioning, solidifying, and separating together are comprised in a single cycle step of the method.

The flexible foil 6 has a liquid contacting side for being in contact with the liquid 3 to form liquid layer 30. At least a contact face 181 in Figure 1 of the guide 180 is in pressing contact with a side of the flexible foil 6 opposite to the liquid contacting side. In the shown example, said pressing contact is realized by a sliding or rolling movement of the guide 180 along said opposite side of the flexible foil 6. Lower parts in Figure 1 of the guide 180 are in rolling contact with a support platform by means of rollers 190. 191. Both the guide 180 and the energy source 90 are movable relative to the platform 7 via these rollers 17 in either or both directions indicated by arrow 73 in Figure 1. The energy source 90 may be movable respective to the guide 180.

In the shown example, the foil 6 is transparent to radiation from energy source 90. As an example it is now assumed that, in the course of time during the performing of a method cycle, the guide 180 and the energy source 90 are synchronously moving in the right-hand direction of arrow 73 in Figure 1. Then, at the instantaneous moment in time shown in Figure 1, there are contacting parts of the layer 30 contacting the tangible object 50 for solidifying certain parts of the layer 30. During the movement of the guide 180 and the energy source 90, these contacting parts 30 are time-dependently varying. Thus, over time, the contacting parts 30 may vary depending, in particular, of the position of the guide 180 relative to the tangible object 50.

Two foil guiding elements (190, 191) arranged on the stage 180 define a contact height defined by a height H where the tangible object 50 contacts the liquid layer 30 and at least one position H0 distanced from the contact height H, for guiding the foil 6 to or from the contact height to contact the tangible object 50 by movement along the tangible object 50 while keeping the foil fixed relative to the tangible object 50 at least during contacting.

The foil 6 can be arranged for carrying the solidifiable layer material 30 supplied from a dispenser 2 to the tangible object 50 and for carrying the removed uncured material away from the tangible object 50. Typically, the uncured material outside the intersection pattern sticks to the moving foil 6 because the adhesive force between the uncured material and the foil 6 are larger than the adhesive force between the uncured material and the tangible object 50.

In the embodiment of Figure 1 the energy source 90 comprises a plurality of individually operable LEDs arranged in rows and columns (not shown). The motion of the energy source 90 may be controlled by a controller, which also controls the lighting of the LEDs. In use, the energy source 90 may be moved rectilinearly in a direction that extends at an angle with the directions of the rows and columns of a LED array to enhance the effective resolution of the system. This technique is described in more detail in copending application EP 07150447.6 in the name of Nederlandse, Organisatie Voor Toegepast- Natuurwetenschappelijk Onderzoek (TNO), which is incorporated herein by reference for further information regarding this aspect. The energy source 90 may be positioned on the movable foil guiding stage 180, between the protruding foil guiding elements 190, 191 so as to expose the layer of uncured material through the foil 6. The energy source may be covered by a transparent plate, e.g. a glass plate to improve the guidance of the foil 6.

The combination of using a LED light source comprising a plurality of individually operable LEDs and partially curing at least part of the intersection pattern may be advantageous. Before explaining this further, the LED light source as used in this embodiment will be described in some detail.

To shorten the length direction of the stage, an energy source 90 is typically limited in length, for example, for working areas of about 50 cm, only about 6 cm length can be realised with elements ('pixels', each having a LED+microlens) of 2 x 2 mm2, and still provide a high resolution of about 15 pixels per mm of working-area-width.

As used herein, the term 'solidifiable material' includes any material which is solidifiable (i.e., which can by polymerized and/or cross-linked) by, for example, a UV light, a laser, ionizing radiation (including but not limited to an electron beam, gamma rays or x-rays), or a combination of any of the foregoing. The term 'solidifiable material' shall also be construed to mean a composite material comprising a mixture of both solidifiable and non-solidifiable materials, such as a resin in which fibers and/or fillers are intermixed.

Partially curing comprises curing to such a degree that the intersection pattern remains stable while removing the uncured material from the layer outside the intersection pattern. The solidifiable material is not fully cured, but only to such an extent that the material is sufficiently stabilized that it is not removed with the uncured material during the step of removing the uncured material outside the intersection pattern.

Fully curing an intersection pattern needs a certain exposure time. Partially curing the intersection pattern means curing the pattern to a lower degree. When the energy source operates at the same power with which the full curing is done, the exposure may be shorter and the speed of the RM and RP processes increases.

The transition of a resin cured by UV from liquid to solid passes a so-called gel-point. "At the gel-point, one first observes the visible formation of a gel or *insoluble polymer fraction*. (The gel point is alternately taken as the point at which the system loses fluidity as measured by the failure of an air bubble to rise in it.) ...The gel corresponds to the formation of an infinite network in which polymer molecules have been crosslinked to each other to form a macroscopic molecule. The gel is in fact considered as one molecule. The nongel portion of the polymer remains soluble in solvents and is referred to as *sol.* As the polymerization and gelation proceed beyond the gel-point, the amount of gel increases at the expense of the sol as more and more polymer chains in the sol are crosslinked to the gel...The reaction mixture is transformed into a polymer of infinite viscosity." George Odian, "Principles of Polymerization," 4th ed.

More curing forms more bonds, e.g. cross links, to realize a higher E-modulus of the material. The degree of curing desired in partially curing may be defined by curing the solidifiable material to a degree on or near the gel-point degree of the material, where the intersection pattern remains stable while removing the uncured material from the layer outside the intersection pattern. In practice, curing to a degree on or near the gel-point degree may be interpreted as a degree within a range of about 80% - 120% of the gel-point degree.

Curing at least part of the intersection pattern includes fully curing as well, as opposed to the partially curing being described above, of a raster pattern in the layer of solidifiable material 3, said raster pattern being dimensioned to hold uncured material. The material may thus be fully cured, but only a raster pattern is cured instead of the complete intersection pattern.

The amount of material that has to be exposed for curing a raster pattern is less than for curing the complete intersection pattern. A laser source may e.g. travel a shorter path, which increases the RP and RM speed.

A combination of partially curing and curing at least part of an intersection pattern, for example, curing a raster of the intersection pattern to a certain degree only, is also possible. This may further speed up the RP and RM process.

To reduce evaporation, it is favorable to remove the resin from the foil in areas where the foil has just been separated (or peeled) from the object 50. This can be done by adding a remover or squeegee 1001 that moves together with carriage 180, thus forming a reservoir 3 of material. As can be seen from the drawing, the squeegee is formed as a wedged plate part having a wedge side adjacent the foil. Preferably this squeegee makes an angle alpha of approximately 10 degrees with the foil 6, that is, the wedge side is angled relative to the plane of foil 6. This approximate angle was found to have the best scraping capability in one direction and the capability to allow resin to pass in the opposite direction, thus retrieving any resin left on the foil rather than pushing it to the edge of the machine.

The wedged plate part retains the resin on a side away from the wedge side. Accordingly, reservoir 3 is enclosed all around: by the squeegee 1001 and by the upward running part of the foil 6. The squeegee 1001 may include extensions having openings for passing shafts of lower roller 190, and seals around the shaft passings. In a bidirectional embodiment, a reservoir 3 is formed on each side of the roller 190. Accordingly, the applicator 2 discloses the wedged plate part 1001 having a wedge side 103, the wedged plate part 1001 enclosing the resin on a side away from the wedge side 103, the wedge side adjacent and being angled relative to the plane of foil.

There may be a liquid layer 30 providing profiled roller (e.g., a Meyer bar) 190 also on each side of the foil guiding stage. The application roller 190 is arranged to apply the resin layer on the side away from the liquid bath 3. In this embodiment, the wedged plate part 1001 is arranged opposite profiled application roller 190 to form a resin bath 3.

In an embodiment, the thickness of the liquid layer 30 provided by the coater bars (Meyer bars) is at least equal to the thickness of the next layer, but preferably a bit more. For example, for building with layers of 50 um, a good value for the liquid layer 30 thickness is around 70 - 80 um. Thus when the foil with the liquid layer 30 is moved towards the object, the space of 50 um between the foil and the previous layer on the object is completely filled with liquid resin. The surplus of resin (20 - 30 um) is pressed forward in front of the roller that lifts the foil towards the object, or sideways into spaces that may be present in the object as built so far.

The rollers that provide the liquid layer 30 (e.g., Meyer bars) are preferably knurled, or profiled, so that the amount of resin that is transported in the recesses of the Meyer bar from the reservoir side of the Meyer bar to the exposure unit side of the Meyer bar is sufficient to provide the desired (in the example: 70 - 80 um) thickness of liquid layer 30. It is to be noted that the liquid in the recesses only partly remains on the foil behind the Meyer bars, and part stays on the Meyer bar. Therefore the size of the recesses has to be determined experimentally. A typical groove width of the Meyer bar is 0.5 mm and a groove height can be also around 0.5 mm. The outer ridges of the grooves of the bar are about 50 micron distanced from the foil.

For the building process to work well, between the exposure and the separation from the foil, the resin should be cured to a certain extent, in order for the newly formed layer to adhere to the previously built layers of the object. For many resins, e.g. DSM Somos ® 8120 (an epoxy acrylate), exposed at 365 nm, curing is faster at a higher temperature. In fact, the mentioned resin is found in an embodiment to work well when used above room temperature, preferably approximately between 30 and 40 °C.

It is noted that the foil side facing the liquid layer 30 should easily separate from (fully or partially) cured resin. Materials that meet this condition include but are not limited to TPX (bulk), silicone (applied as a coating on a foil of different material) and other materials that allow for easy separation.

The method and system of the invention have been tested successfully with acrylate and epoxy (and epoxy-acrylate) resins, using exposure with UV light around 365-375 nm. The following commercial types are among these:
DSM Somos 8120 (epoxy-acrylate)
Envisiontec R5 Profactory (acrylate)

To prevent sticking between underside of foil and topside of exposure head; which can occur due to van der Waals forces when these surfaces are very smooth., a very light rubbing with talcum powder or similar may be applied.

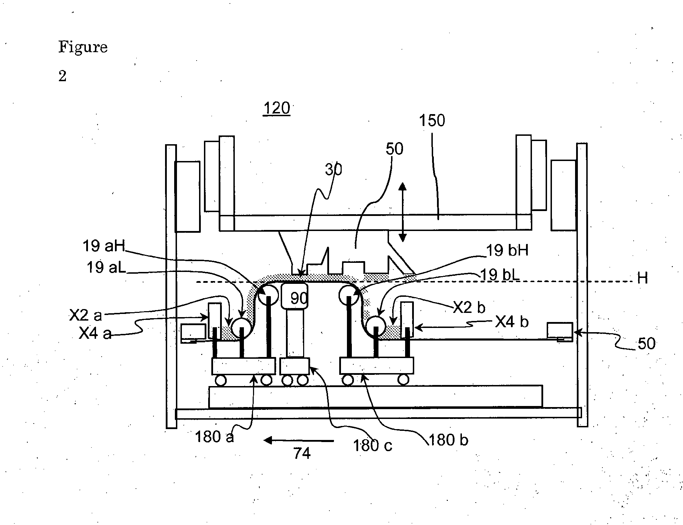

Figure 2 provides additional disclosure of a bidirectional embodiment wherein the stage is segmented in sub stages supporting lower and upper rollers 19aL, 19aH, energy source 90 and lower and upper rollers 19bL, 19bH respectively. In the case of bidirectional use, advantageously separate sub stages for the exposure unit (180 c) and for the equipment on either side of the exposure unit (180 a and 180 b) are used in contrast to previously disclosed single stages. This has the advantage that the distance between the stage can be optimized for the movement direction, in dependency of the times required for the different subprocesses.

- As shown here a first process step is carried out in the right-to-left direction 74. Lower roller 19aL has the function of providing the liquid layer 30, upper roller 19aH has the function of lifting the coated foil up to the level H;
- On the side of the exposure head 90 opposite rollers 19aL and 19aH, upper roller 19 bH has the function of peeling roller, and the lower roller 19 bL has the function of guiding the foil back to the lower level.
- After a single cycle has been completely performed from right to left (the foil has been completely peeled off from the product, a new cycle can be started immediately from left to right. Now the functions of 19 bH and 19 aH are interchanged, and the functions of 19 bL and 19 aL are interchanged.
- So upper rollers 19 bH and 19 aH are designed to be suitable for both the lifting and the peeling function.
Additionally, lower rollers 19 aL and 19 bL are arranged to be suitable for both providing a liquid layer 30 of correct thickness, and for guiding the foil. A reservoir is present on either sides (X2a and X2b).
Note that the squeegees X4a and X4b are preferably both present even in the case of unidirectional use (even in that case the resin must preferably be retained within the space defined by the squeegees).

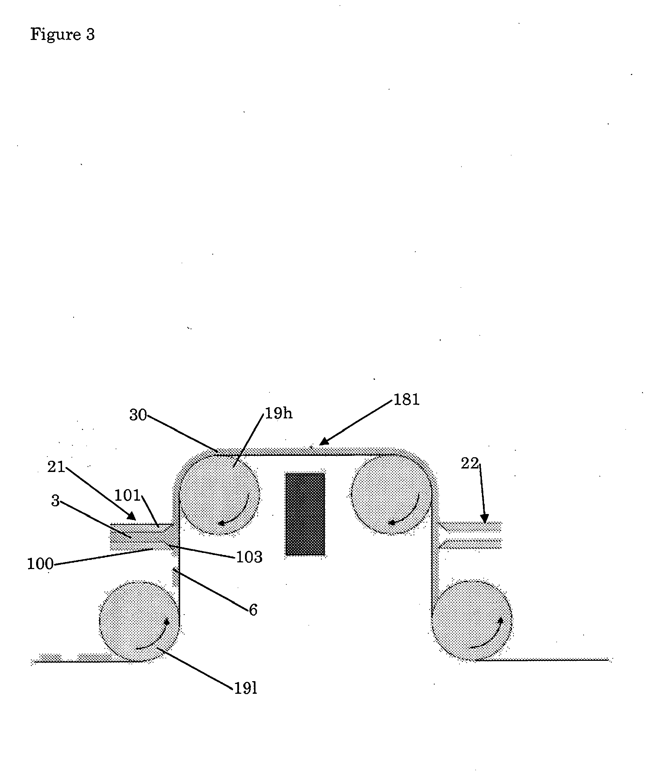

Figure 3 shows a detailed view on an alternative wedged plate configuration. While in the previous embodiment the wedged plate arranged to retain the liquid on one side of the plate; in another embodiment, the wedge plate can be provided with a second wedge plate to form a slotted orifice 21 arranged to apply the liquid layer 30 with ambient environment exposure only when the liquid layer 30 is formed. In this configuration the exposure of the liquid layer 30 to the ambiance is further reduced relative to the previous embodiment because the liquid volume 3 inside the orifice 21 is unexposed. Plate part 100 is arranged opposite a second wedge shaped plate 101 part to form the orifice 21 for resin supply. For the process to work well, the second wedge shaped plate part 101 defines a smallest distance to the foil in a range of 50 - 200 micron to apply the resin layer 30 on the side away from the first plate part 100. The orifice 21 is shaped as a flat rectangular channel of which the bottom and top walls are formed by wedge shaped plate parts 100, 101.

The plate part 100 can be slightly distanced from the foil 6, typically, the wedge side 103 defines a smallest distance to the foil in a range of 10 -100 micron. This small gap may result in decreasing foil tension and it may prevent mechanical wear of the applicator foil 6 while still performing a removing function to keep the foil clear from liquid in the area away from the stage 180 and keeping the liquid well conditioned by preventing exposure to the ambient environment so that can be prevented that oxygen diffusion into the liquid layer reaches an unacceptable level. Oxygen can inhibit the radical polymerisation process of resin, which may compromise the curing process. Typically, the resin comprises acrylate components which may evaporate substantially faster than epoxy components, depending on chemical structure. Therefore, longer exposure to the ambient environment may result in evaporation which can change the composition of the resin and increases the viscosity of the resin, which may complicate handling of the resin.

Due to the compact nature of the slotted resin supply 21, having a relatively small width between the opposed plates 100, 101, the supply can be provided on any position between upper and lower foil guiding elements 19h and 191 respectively- preferably near upper guiding element 19h as close to the contact face 181 as possible. In contrast to the embodiments of Figure 1 and Figure 2, transport times of the liquid layer to the curing section can be reduced since the slotted resin supplies 21, 22 can be placed very close to the section 181 of the foil 6 that is brought in contact with the object.

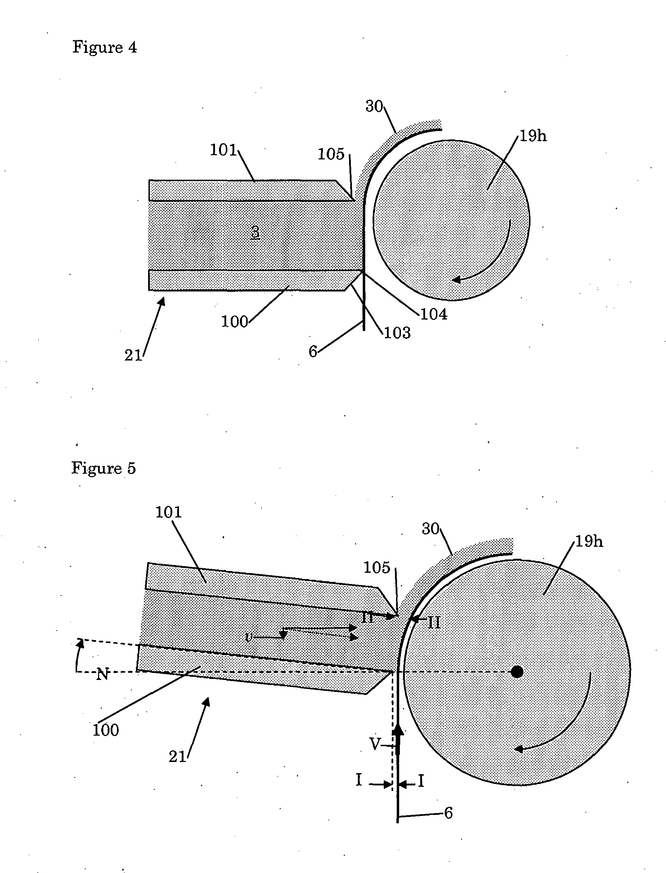

Figure 4 shows an advantageous position of the liquid supply 21, wherein at least one of the plate parts is arranged adjacent an upper foil guiding element. In this respect, the term adjacent is used to indicate that the edges are in near abutment of the foil guiding element 19h. The gap between the wedged plate's lower edge 104 and the foil guiding element 19h, extending in a plane parallel to the wedge plates defines a smallest distance to the foil in a range of 10 -200 micron. This distance is small enough to retain the resin on the plate 100 and not damage the foil 6. The gap between the wedged plate's upper edge 105 and the foil guiding element 19h, extending in a plane parallel to the wedge plate 101 defines a smallest distance to the foil in a range of 50 - 200 micron. The plate thickness may be in the order of 1-3 mm. A typical layer thickness is about 100 micron, preferably in the order of 50 - 250 micron.

This arrangement further reduces the time that the resin layer 30 is exposed to the atmosphere so that evaporation and oxygen diffusion can be reduced and resin quality can be controlled during the whole object building process.

Figure 5 shows a variation of the embodiment of Figure 4. In this embodiment the liquid gap II-II defining the layer thickness is provided between an outer edge 105 of the wedge side 101 and the foil support 19h which may enhance the layer thickness stability since it is made substantially independent of the foil tension. In addition, the orifice 21 is has a slight tilt with respect to a normal direction N out of a plane parallel to the foil 6, so that outflowing resin 3 is directed with a slight velocity component *v* against the foil movement V relative to the orifice 21. A realistic foil velocity may be in the order of 50-100 mm/s. The angled resin outflow may prevent instabilities in layer 30 forming such as air inclusions or layer width variations in the resin. A typical angle ranges between 5 and 20 degrees respective to the normal of the foil and can depend on process parameters such as gap width, foil speed, resin viscosity and resin surface tension.

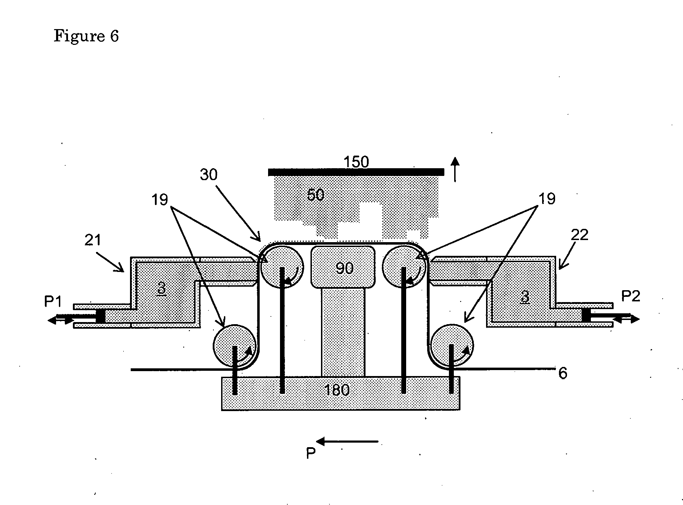

Figure 6 shows an embodiment having two pressurized orifices 21, 22 substantially symmetrically arranged adjacent both sides of stage 180. The resin supply comprises a resin pressurizer P1, P2 to provide a supply or uptake condition depending on a stage movement direction P. Thus, in use, on a side of the stage 180 wherein the foil currently moves towards the contact face 181 (in the figure this shown as the left hand side, with orifice 21 and movement direction P of stage 180 to the left) the resin layer 30 is applied by providing a slight overpressure that is sufficient to allow the layer to be formed. A typical pressure may be in the order of 0.5 bar, typically 3-6x10^4 Pa with a gradient of about -3x10^7 Pa/m over the plate thickness.

Simultaneously, on the opposite side 22, where the foil moves away from contact face 181, a slight underpressure is provided in the orifice such that resin uptake is provided. When the stage movement direction is reversed, in a subsequent cycle, uptake and supply are interchanged by suitably changing the pressure of the liquid in the orifice. This embodiment has the advantage that the liquid is immediately reused in a last first out order while being supplemented with fresh liquid 3 to provide a subsequent layer 30 for solidifying purposes. Thus, liquid degradation is kept minimal.

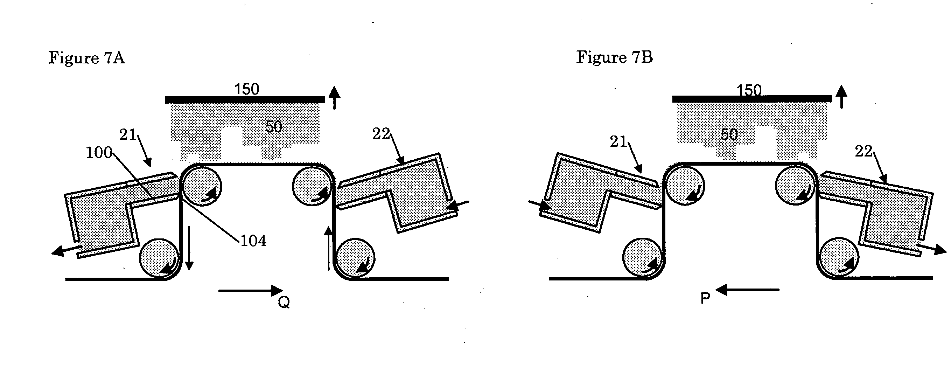

Figure 7 shows a further embodiment wherein the tilt angle of the orifice is controlled by pivoting the orifice 21, 22 on a pivot point that is close to the outer edge 104 of the wedge side defining the smallest gap height relative to the foil 6 (see Figure 5). In particular the orifices 21, 22 are tiltably mounted on the stage to have a tilted orientation depending on the supply or uptake condition. In effect, the orifices on either side of the stage 180 are kept substantially aligned with a slight tilt with respect to a normal direction out of a plane parallel to the foil. Figure 7A illustrates this with the stage 180 moving to right in direction Q: effectively the foil moves in upward direction on the right side, while the orifice 22 is oriented with slight tilt with respect to a normal direction out of a plane parallel to the foil so that outflowing resin is directed with a slight velocity component against the foil movement relative to the orifice as illustrated in detail in Figure 5. Simultaneously, in Figure 7A, the left orifice 21 functions as resin uptake by applying a slight under pressure and has a tilt angle which reduces the angle of flow between the liquid layer on the foil and the flow direction in the orifice. It is noted that the angles of left and right orifices in Figure 7A can be favorably mechanically combined but need not be identical.

Figure 7B shows the reverse direction with the stage 180 moving in a direction P from right to left: here the angles and pressures are reversed dependent on the movement direction respective to Figure 7A. The movement direction of the applicator system may be described as, for instance, relative to the tangible object and/or along the foil.

The detailed drawings, specific examples and particular formulations given serve the purpose of illustration only. While the specific embodiments of the apparatus 12 described and shown herein concern building the model 5 upside down, the teachings of the present invention may be applied to apparatuses that build models right side up. The aspects of the present invention can also be applied in apparatuses for conventional RP and RM techniques like Selective Laser Sintering (SLS) and Stereo Lithography (SL).

The orifices 21, 22 may be additionally provided with heating or ultrasound excitation to result in a lower viscosity locally in the slot die, which may improve the liquid supply resin and control over the layer thickness while reducing the over- and underpressures to be provided.

In the foregoing specification, the invention has been described with reference to specific examples of embodiments of the invention. It will, however, be evident that various modifications and changes may be made therein without departing from the scope of the invention as set forth in the appended claims. Furthermore, the object may have any suitable size and shape. The specifications and drawings are, accordingly, to be regarded in an illustrative rather than in a restrictive sense.

## Claims

1. Additive fabrication apparatus comprising:
- a carrier plate (150) capable of supporting a tangible object (50);
- a foil (6) capable of supporting a liquid layer (30); said carrier plate (150) and foil (6) capable of relative movement with respect to each other so as to bring the liquid layer (30) into contact with the carrier plate or the tangible object (50);
- an energy source (90) arranged for at least partially solidifying at least part of an intersection pattern in the liquid layer arranged on the foil and in contact with the tangible object; and
- an applicator system (2) for applying the liquid layer (30) on the foil (6) comprising a first applicator, **characterized in that** the first applicator is arranged to alternate between providing a supply condition wherein liquid is supplied to the foil via an orifice and providing an uptake condition wherein liquid is taken up from the foil via the orifice.

2. Additive fabrication apparatus of claim 1 wherein the applicator system is movable and the supply condition or uptake condition is dependent on a movement direction of the applicator system.

3. Additive fabrication apparatus of claim 1 or 2 wherein the first applicator comprises a first wedge shaped plate part arranged opposite a second wedge shaped plate part to form a slotted orifice arranged to apply the liquid layer.

4. Additive fabrication apparatus of any one of claims 1-3 wherein the applicator system further comprises a second applicator arranged to provide a supply or uptake condition opposite the supply or uptake condition of the first applicator.

5. Additive fabrication apparatus according to any one of claims 1-4 wherein the supply condition is modified by at least one liquid pressurizer supplying an overpressure, and the uptake condition is modified by at least one liquid pressurizer supplying an underpressure.

6. Additive fabrication apparatus according to claim 4 wherein the supply or uptake condition of the first applicator and second applicator is modified by pivoting the first applicator and second applicator such that the first applicators and second applicator has a tilted orientation depending on the supply or uptake condition, wherein the first applicator and the second applicator are moveable independently of one another.

7. Additive fabrication apparatus according to any one of claims 1-6 wherein in the uptake condition liquid is taken up from the foil after partially solidifying said at least part of an intersection pattern in the liquid layer arranged on the foil and in the supply condition liquid is supplied to the foil prior to partially solidifying said at least part of an intersection pattern in the liquid layer arranged on the foil.

8. Additive fabrication apparatus comprising:
- a movable foil guiding stage (180) arranged to guide a construction shape in the form of a flexible foil (6), said stage (180) having a contact face (181) and comprising on opposite sides of the contact face (181) a pair of upper and lower foil guiding elements (190,191), the lower foil guiding element (190) defining a foil height position (H0) distanced from the contact face, for guiding, in use, a portion of the foil (6) including a liquid layer (30) from the foil height position H(0), along the contact face (181) to contact a tangible object (50) by movement of the foil guiding stage (180) along the tangible object (50) while keeping the portion of the foil (6) contacting the tangible object (50) stationary relative to the object;
- an energy source (90) arranged for at least partially solidifying at least part of an intersection pattern in the liquid layer arranged on the foil and in contact with the tangible object;
- further comprising an applicator system (2) for application of the liquid layer (30) on the foil, **characterized in** the applicator system (2) comprising an orifice (21) movable with the foil guiding stage (180) and arranged to provide an uptake condition wherein liquid is taken up from the foil into the orifice; the uptake condition being dependent on a movement direction of the orifice so that liquid is taken up from the foil into the orifice after solidification of at least said part of the intersection pattern.

9. Additive fabrication apparatus according to claim 8, wherein the orifice (21) comprises a wedged plate having a wedge side adjacent and being angled relative to the plane of foil; arranged to retaining the liquid on one side of the plate.

10. Additive fabrication apparatus according to claim 8 or 9, wherein an additional orifice is provided movable with the foil guiding stage (180), both orifice and additional orifices arranged on opposite sides of the contact face (181), to provide a supply condition by the additional orifice, where liquid is supplied to the foil prior to partially solidifying said at least part of the intersection pattern in the liquid layer.

11. Additive fabrication apparatus according to claim 9, the wedged plate further comprising a first plate part arranged opposite a second wedge shaped plate part to form the orifice arranged to apply the liquid layer, wherein at least one of the plate parts is arranged adjacent an upper foil guiding element, and wherein the second wedge shaped plate part defines a smallest distance to the foil in a range of 50 - 200 micron.

12. Additive fabrication apparatus according to claim 10, wherein each orifice is provided on a position between upper and lower foil guiding elements.

13. Additive fabrication apparatus according to claim 10, wherein each orifice comprises a liquid pressurizer arranged to provide a supply or uptake condition depending on a stage movement direction.

14. Additive fabrication apparatus according to claim 8, wherein the orifice is tiltably mounted on the stage to have a tilted orientation depending on the supply or uptake condition.

15. Additive fabrication apparatus according to claim 8, wherein the energy source (90) is positioned adjacent the contact face (181) so as to expose the liquid layer through the foil (11).

16. The system according to claim 8, wherein the applicator system comprises wedged plates arranged on opposite sides of the stage.

17. A method of layerwise production of a tangible object comprising:
- moving a foil guiding stage (180) arranged to guide a construction shape in the form of a flexible foil (6), said stage (180) having a contact face (181) and comprising on opposite sides of the contact face (181) a pair of upper and lower foil guiding elements (190,191), the lower foil guiding element (190) defining a foil height position H(0) distanced from the contact face, to guide, in use, a portion of the flexible foil (6) including a liquid layer (30) from the foil height position H(0), along the contact face (181) to contact a tangible object (50) by movement of the foil guiding stage (180) along the tangible object (50) while keeping the portion of the foil (6) contacting the tangible object (50) stationary relative to the object;
- providing an applicator system (2) arranged in a liquid supply condition by applying the liquid layer (30) on the foil;
- at least partially solidifying at least part of an intersection pattern in the liquid layer arranged on the foil and in contact with the tangible object by an energy source (90); and **characterized in**
- providing the applicator system (2) arranged in a liquid uptake condition wherein liquid is taken up from the foil into an orifice (21) movable with the foil guiding stage (180); the uptake condition being dependent on a movement direction of the orifice so that liquid is taken up from the foil into the orifice after solidification of at least said part of the intersection pattern.

18. A method according to claim 17, further comprising tilting the orifice relative to the stage to have a tilted orientation depending on the supply or uptake condition, and wherein the liquid supply or uptake condition is provided depending on a stage movement direction.

## Patentansprüche

1. Vorrichtung zur Herstellung eines Zusatzes, umfassend:
- eine Trägerplatte (150), die in der Lage ist, ein greifbares Objekt (50) zu stützen;
- eine Folie (6), die in der Lage ist, eine Flüssigkeitsschicht (30) zu stützen; wobei die Trägerplatte (150) und die Folie (6) in der Lage sind, sich relativ zueinander zu bewegen, um die Flüssigkeitsschicht (30) mit der Trägerplatte oder dem greifbaren Objekt (50) in Berührung zu bringen;
- eine Energiequelle (90), angeordnet, um mindestens einen Teil eines Kreuzungsmusters in der Flüssigkeitsschicht, angeordnet auf der Folie und in Berührung mit dem greifbaren Objekt, mindestens teilweise zu verfestigen; und
- ein Applikatorsystem (2) zum Aufbringen der Flüssigkeitsschicht (30) auf die Folie (6), umfassend einen ersten Applikator, **dadurch gekennzeichnet, dass** der erste Applikator angeordnet ist, um zwischen der Bereitstellung eines Zufuhrzustandes, in dem die Flüssigkeit der Folie über eine Öffnung zugeführt wird, und der Bereitstellung eines Aufnahmezustandes, in dem die Flüssigkeit von der Folie über die Öffnung aufgenommen wird, abzuwechseln.

2. Vorrichtung zur Herstellung eines Zusatzes nach Anspruch 1, wobei das Applikatorsystem beweglich ist und der Zufuhrzustand oder Aufnahmezustand von einer Bewegungsrichtung des Applikatorsystems abhängt.

3. Vorrichtung zur Herstellung eines Zusatzes nach Anspruch 1 oder 2, wobei der erste Applikator ein erstes keilförmiges Plattenteil, angeordnet gegenüber einem zweiten keilförmigen Plattenteilt, umfasst, um eine Schlitzöffnung zu bilden, angeordnet zum Aufbringen der Flüssigkeitsschicht.

4. Vorrichtung zur Herstellung eines Zusatzes nach einem der Ansprüche 1-3, wobei das Applikatorsystem ferner einen zweiten Applikator umfasst, angeordnet um einen Zufuhr- oder Aufnahmezustand gegenüber dem Zufuhr- oder Aufnahmezustand des ersten Applikators bereitzustellen.

5. Vorrichtung zur Herstellung eines Zusatzes nach einem der Ansprüche 1-4, wobei der Zufuhrzustand durch mindestens einen Flüssigkeitsdruckgeber, der einen Überdruck liefert, geändert wird, und der Aufnahmezustand durch mindestens einen Flüssigkeitsdruckgeber, der einen Unterdruck liefert, geändert wird.

6. Vorrichtung zur Herstellung eines Zusatzes nach Anspruch 4, wobei der Zufuhr- oder Aufnahmezustand des ersten Applikators und des zweiten Applikators geändert wird, indem der erste Applikator und der zweite Applikator so gedreht werden, dass der erste Applikator und der zweite Applikator eine Neigungsausrichtung abhängig von dem Zufuhr- oder Aufnahmezustand haben, wobei der erste Applikator und der zweite Applikator unabhängig voneinander beweglich sind.

7. Vorrichtung zur Herstellung eines Zusatzes nach einem der Ansprüche 1-6, wobei im Aufnahmezustand Flüssigkeit von der Folie aufgenommen wird, nachdem der mindestens eine Teil eines Kreuzungsmusters in der auf der Folie angeordneten Flüssigkeitsschicht teilweise verfestigt ist, und im Zufuhrzustand Flüssigkeit der Folie zugeführt wird, bevor der mindestens eine Teil eines Kreuzungsmusters in der auf der Folie angeordneten Flüssigkeitsschicht verfestigt ist.

8. Vorrichtung zur Herstellung eines Zusatzes, umfassend:
- ein bewegliches Folienführungsgestell (180), angeordnet um eine Konstruktionsform in Form einer flexiblen Folie (6) zu führen, wobei das Gestell (180) eine Kontaktfläche (181) hat und an entgegengesetzten Seiten der Kontaktfläche (181) ein Paar obere und untere Folienführungselemente (190, 191) umfasst, wobei das untere Folienführungselement (190) eine Folienhöhenposition (H0) in einem Abstand von der Kontaktfläche definiert, um, bei Verwendung, einen Abschnitt der Folie (6) einschließlich einer Flüssigkeitsschicht (30) von der Folienhöhenposition H(0) an der Kontaktfläche (181) entlang zum Berühren eines greifbaren Objekts (50) zu führen, indem das Folienführungsgestell (180) an dem greifbaren Objekt (50) entlang bewegt wird, während der Abschnitt der Folie (6), der das greifbare Objekt (50) berührt, ortsfest zu dem Objekt bleibt;
- eine Energiequelle (90), angeordnet um mindestens einen Teil eines Kreuzungsmusters in der Flüssigkeitsschicht, angeordnet auf der Folie und in Berührung mit dem greifbaren Objekt, mindestens teilweise zu verfestigen;
- ferner umfassend ein Applikatorsystem (2) zum Aufbringen der Flüssigkeitsschicht (30) auf der Folie, **dadurch gekennzeichnet, dass** das Applikatorsystem (2) eine Öffnung (21) umfasst, die mit dem Folienführungsgestell (180) beweglich ist und angeordnet ist, um einen Aufnahmezustand bereitzustellen, wobei Flüssigkeit von der Folie in die Öffnung aufgenommen wird; wobei der Aufnahmezustand von einer Bewegungsrichtung der Öffnung abhängig ist, sodass Flüssigkeit nach Verfestigung des mindestens einen Teils des Kreuzungsmusters von der Folie in die Öffnung aufgenommen wird.

9. Vorrichtung zur Herstellung eines Zusatzes nach Anspruch 8, wobei die Öffnung (21) eine keilförmige Platte, mit einer Keilseite angrenzend an und angewinkelt zu der Ebene der Folie, umfasst; angeordnet um die Flüssigkeit auf einer Seite der Platte zurückzuhalten.

10. Vorrichtung zur Herstellung eines Zusatzes nach Anspruch 8 oder 9, wobei eine zusätzliche Öffnung beweglich mit dem Folienführungsgestell (180) bereitgestellt ist, wobei sowohl die Öffnung als auch die zusätzliche Öffnung an entgegengesetzten Seiten der Kontaktfläche (181) angeordnet sind, um einen Zufuhrzustand durch die zusätzliche Öffnung bereitzustellen, in dem Flüssigkeit der Folie zugeführt wird, bevor der mindestens eine Teil des Kreuzungsmusters in der Flüssigkeitsschicht teilweise verfestigt wird.

11. Vorrichtung zur Herstellung eines Zusatzes nach Anspruch 9, wobei die keilförmige Platte ferner ein erstes Plattenteil, angeordnet gegenüber eines zweiten keilförmigen Plattenteils, umfasst, um die Öffnung, angeordnet zum Aufbringen der Flüssigkeit, zu bilden, wobei mindestens eines der Plattenteile angrenzend an ein oberes Folienführungselement angeordnet ist und wobei das zweite keilförmige Plattenteil einen kleinsten Abstand zu der Folie in einem Bereich von 50-200 Mikron definiert.

12. Vorrichtung zur Herstellung eines Zusatzes nach Anspruch 10, wobei jede Öffnung an einer Position zwischen oberen und unteren Folienführungselementen bereitgestellt ist.

13. Vorrichtung zur Herstellung eines Zusatzes nach Anspruch 10, wobei jede Öffnung einen Flüssigkeitsdruckgeber umfasst, angeordnet um abhängig von einer Bewegungsrichtung des Gestells einen Zufuhr- oder Aufnahmezustand bereitzustellen.

14. Vorrichtung zur Herstellung eines Zusatzes nach Anspruch 8, wobei die Öffnung neigbar auf dem Gestell montiert ist, um eine Neigungsausrichtung abhängig von dem Zufuhr- oder Aufnahmezustand zu haben.

15. Vorrichtung zur Herstellung eines Zusatzes nach Anspruch 8, wobei die Energiequelle (90) angrenzend an die Kontaktfläche (181) positioniert ist, um die Flüssigkeitsschicht durch die Folie (11) zu exponieren.

16. System nach Anspruch 8, wobei das Applikatorsystem keilförmige Platten, angeordnet an entgegengesetzten Seiten des Gestells, umfasst.

17. Verfahren zur schichtweisen Herstellung eines greifbaren Objekts, umfassend dass:
- ein Folienführungsgestell (180), angeordnet zum Führen einer Konstruktionsform in Form einer flexiblen Folie (6), bewegt wird, wobei das Gestell (180) eine Kontaktfläche (181) hat und an entgegengesetzten Seiten der Kontaktfläche (181) ein Paar obere und untere Folienführungselemente (190, 191) umfasst, wobei das untere Folienführungselement (190) eine Folienhöhenposition H(0) in einem Abstand von der Kontaktfläche definiert, um, bei Verwendung, einen Abschnitt der flexiblen Folie (6) einschließlich einer Flüssigkeitsschicht (30) von der Folienhöhenposition H(0) an der Kontaktfläche (181) entlang zum Berühren eines greifbaren Objekts (50) zu führen, indem das Folienführungsgestell (180) an dem greifbaren Objekt (50) entlang bewegt wird, während der Abschnitt der Folie (6), der das greifbare Objekt (50) berührt, ortsfest zu dem Objekt bleibt;
- ein Applikatorsystem (2) bereitgestellt wird, angeordnet in einem Zufuhrzustand durch Aufbringen der Flüssigkeitsschicht (30) auf die Folie;
- mindestens ein Teil eines Kreuzungsmusters in der Flüssigkeitsschicht, angeordnet auf der Folie und in Berührung mit dem greifbaren Objekt, durch eine Energiequelle (90) mindestens teilweise verfestigt wird; und **dadurch gekennzeichnet, dass**
- das Applikatorsystem (2) angeordnet in einem Flüssigkeitsaufnahmezustand bereitgestellt wird, wobei Flüssigkeit von der Folie in eine (21) Öffnung, die mit dem Folienführungsgestell (180) beweglich ist, aufgenommen wird; wobei der Aufnahmezustand von einer Bewegungsrichtung der Öffnung abhängt, sodass Flüssigkeit von der Folie in die Öffnung aufgenommen wird, nachdem der mindestens eine Teil des Kreuzungsmusters verfestigt ist.

18. Verfahren nach Anspruch 17, ferner umfassend das Neigen der Öffnung zu dem Gestell, um eine Neigungsausrichtung abhängig von dem Zufuhr- oder Aufnahmezustand zu haben, und wobei der Flüssigkeitszufuhr- oder -aufnahmezustand abhängig von einer Bewegungsrichtung des Gestells bereitgestellt wird.

## Revendications

1. Appareil de fabrication additive comprenant :
- une plaque de support (150) capable de supporter un objet tangible (50) ;
- une feuille (6) capable de supporter une couche de liquide (30) ; ladite plaque de support (150) et la feuille (6) pouvant effectuer un mouvement relatif l'une par rapport à l'autre de manière à amener la couche de liquide (30) en contact avec la plaque de support ou avec l'objet tangible (50) ;
- une source d'énergie (90) agencée pour solidifier au moins partiellement au moins une partie d'un motif d'intersection dans la couche de liquide agencée sur la feuille et en contact avec l'objet tangible ; et
- un système d'application (2) pour appliquer la couche de liquide (30) sur la feuille (6) comprenant un premier applicateur, **caractérisé en ce que** le premier applicateur est agencé pour alterner entre une condition de fourniture dans laquelle le liquide est fourni à la feuille à travers un orifice et une condition de reprise dans laquelle le liquide est repris de la feuille à travers l'orifice.

2. Appareil de fabrication additive selon la revendication 1, dans lequel le système d'application peut être déplacé et la condition de fourniture ou la condition de reprise est fonction d'une direction de déplacement du système d'application.

3. Appareil de fabrication additive selon la revendication 1 ou 2, dans lequel le premier applicateur comprend une première partie de plaque en forme de coin agencée face à une deuxième partie de plaque en forme de coin pour former un orifice en forme de fente agencé pour appliquer la couche de liquide.

4. Appareil de fabrication additive selon l'une quelconque des revendications 1 à 3, dans lequel le système d'application comprend en outre un deuxième applicateur agencé pour réaliser une condition de fourniture ou de reprise opposée à la condition de fourniture ou de reprise du premier applicateur.

5. Appareil de fabrication additive selon l'une quelconque des revendications 1 à 4, dans lequel la condition de fourniture est modifiée par au moins un dispositif de mise sous pression de liquide appliquant une surpression, et la condition de reprise est modifiée par au moins un dispositif de mise sous pression de liquide appliquant une sous-pression.

6. Appareil de fabrication additive selon la revendication 4, dans lequel la condition de fourniture ou de reprise du premier applicateur et du deuxième applicateur est modifiée en faisant pivoter le premier applicateur et le deuxième applicateur de sorte que le premier applicateur et le deuxième applicateur ont une orientation inclinée en fonction de la condition de fourniture ou de reprise, dans lequel le premier applicateur et le deuxième applicateur peuvent être déplacés indépendamment l'un de l'autre.

7. Appareil de fabrication additive selon l'une quelconque des revendications 1 à 6, dans lequel, dans la condition de reprise, le liquide est repris de la feuille après la solidification partielle de ladite au moins une partie d'un motif d'intersection dans la couche de liquide agencée sur la feuille et, dans la condition de fourniture, le liquide est fourni à la feuille avant la solidification partielle de ladite au moins une partie d'un motif d'intersection dans la couche de liquide agencée sur la feuille.

8. Appareil de fabrication additive comprenant :
- un étage de guidage de feuille mobile (180) agencé pour guider une forme de construction sous la forme d'une feuille souple (6), ledit étage (180) comportant une face de contact (181) et comprenant, sur des côtés opposés de la face de contact (181), une paire d'éléments de guidage de feuille supérieur et inférieur (190, 191), l'élément de guidage de feuille inférieur (190) définissant une position de hauteur de feuille (H0) à distance de la face de contact, pour guider, en utilisation, une partie de la feuille (6) comprenant une couche de liquide (30) à partir de la position de hauteur de feuille H(0), le long de la face de contact (181) pour qu'elle vienne en contact avec un objet tangible (50) par le déplacement de l'étage de guidage de feuille (180) le long de l'objet tangible (50) tout en maintenant la partie de la feuille (6) en contact avec l'objet tangible (50) fixe par rapport à l'objet ;
- une source d'énergie (90) agencée pour solidifier au moins partiellement au moins une partie d'un motif d'intersection dans la couche de liquide agencée sur la feuille et en contact avec l'objet tangible ;
- comprenant en outre un système d'application (2) pour l'application de la couche de liquide (30) sur la feuille, **caractérisé en ce que** le système d'application (2) comprend un orifice (21) pouvant être déplacé avec l'étage de guidage de feuille (180) et agencé pour réaliser une condition de reprise dans laquelle le liquide est repris de la feuille dans l'orifice ; la condition de reprise étant fonction d'une direction de déplacement de l'orifice de sorte que le liquide est repris de la feuille dans l'orifice après la solidification d'au moins ladite partie du motif d'intersection.

9. Appareil de fabrication additive selon la revendication 8, dans lequel l'orifice (21) comprend une plaque à coin comportant un côté de coin adjacent au plan de la feuille et incliné par rapport à celui-ci ; agencée pour retenir le liquide sur un côté de la plaque.

10. Appareil de fabrication additive selon la revendication 8 ou 9, dans lequel un orifice supplémentaire est prévu pouvant être déplacé avec l'étage de guidage de feuille (180), l'orifice et l'orifice supplémentaire étant tous deux agencés sur des côtés opposés de la face de contact (181), pour réaliser une condition de fourniture par l'orifice supplémentaire, où le liquide est fourni à la feuille avant la solidification partielle de ladite au moins une partie du motif d'intersection dans la couche de liquide.

11. Appareil de fabrication additive selon la revendication 9, la plaque à coin comprenant en outre une première partie de plaque agencée face à une deuxième partie de plaque en forme de coin pour former l'orifice agencé pour appliquer la couche de liquide, dans lequel au moins l'une des parties de plaque est agencée adjacente à un élément de guidage de feuille supérieur, et dans lequel la deuxième partie de plaque en forme de coin définit une distance la plus petite jusqu'à la feuille dans une plage de 50 à 200 microns.

12. Appareil de fabrication additive selon la revendication 10, dans lequel chaque orifice est prévu à une position entre les éléments de guidage de feuilles supérieur et inférieur.

13. Appareil de fabrication additive selon la revendication 10, dans lequel chaque orifice comprend un dispositif de mise sous pression de liquide agencé pour réaliser une condition de fourniture ou de reprise en fonction d'une direction de déplacement de l'étage.

14. Appareil de fabrication additive selon la revendication 8, dans lequel l'orifice est prévu de manière inclinable sur l'étage pour qu'il ait une orientation inclinée en fonction de la condition de fourniture ou de reprise.

15. Appareil de fabrication additive selon la revendication 8, dans lequel la source d'énergie (90) est positionnée adjacente à la face de contact (181) de manière à exposer la couche de liquide à travers la feuille (11).

16. Système selon la revendication 8, dans lequel le système d'application comprend des plaques à coin agencées sur des côtés opposés de l'étage.

17. Procédé de production en couches d'un objet tangible comprenant :
- le déplacement d'un étage de guidage de feuille (180) agencé pour guider une forme de construction sous la forme d'une feuille souple (6), ledit étage (180) comportant une face de contact (181) et comprenant, sur des côtés opposés de la face de contact (181), une paire d'éléments de guidage de feuille supérieur et inférieur (190, 191), l'élément de guidage de feuille inférieur (190) définissant une position de hauteur de feuille H(0) à distance de la face de contact, pour guider, en utilisation, une partie de la feuille souple (6) comprenant une couche de liquide (30) à partir de la position de hauteur de feuille H(0), le long de la face de contact (181) pour qu'elle vienne en contact avec un objet tangible (50) par le déplacement de l'étage de guidage de feuille (180) le long de l'objet tangible (50) tout en maintenant la partie de la feuille (6) en contact avec l'objet tangible (50) fixe par rapport à l'objet ;
- la fourniture d'un système d'application (2) agencé dans une condition de fourniture de liquide pour appliquer la couche de liquide (30) sur la feuille ;
- la solidification au moins partielle d'au moins une partie d'un motif d'intersection dans la couche de liquide agencée sur la feuille et en contact avec l'objet tangible par une source d'énergie (90) ; et **caractérisé par**
- la fourniture du système d'application (2) agencé dans une condition de reprise de liquide dans laquelle le liquide est repris de la feuille dans un orifice (21) pouvant être déplacé avec l'étage de guidage de feuille (180) ; la condition de reprise étant fonction d'une direction de déplacement de l'orifice de sorte que le liquide est repris de la feuille dans l'orifice après la solidification d'au moins ladite partie du motif d'intersection.

18. Procédé selon la revendication 17, comprenant en outre l'inclinaison de l'orifice par rapport à l'étage pour qu'il ait une orientation inclinée en fonction de la condition de fourniture ou de reprise, et dans lequel la condition de fourniture ou de reprise du liquide est réalisée en fonction d'une direction de déplacement de l'étage.
